# EUROPEAN PATENT SPECIFICATION

(11) **EP 1 924 061 B1**
(45) Date of publication and mention of the grant of the patent: **13.05.2009**
(21) Application number: 08152556.0
(22) Date of filing: 28.05.2004
(51) Int. Cl.: H04M 1/03, H04M 1/23

(54) **Keypad and microphone arrangement**
Tastatur und Mikrophonanordnung
Agencement de clavier et microphone

(43) Date of publication of application: 21.05.2008
(62) Divisional of application: 04102415.9
(73) Proprietor: Research In Motion Limited, Waterloo, Ontario N2L 3W8 (CA)
(72) Inventor: Macintosh, Scott, Waterloo Ontario N2L 3W8 (CA); Dabov, Teodor, Waterloo Ontario N2L 3W8 (CA); Hawker, Larry, Waterloo Ontario N2T 2W6 (CA); Simoes, Philip, Waterloo, Ontario N2L 3W8 (CA)
(74) Representative: Rickard, David John

(56) References cited:
- EP-A- 0 871 313
- US-A- 5 265 274
- US-A1- 2003 223 610

## Description

The invention relates generally to a microphone arrangement for a voice communication device, in particular an arrangement relating to a layout of a microphone and a keypad.

In a voice communication device, a microphone and a speaker must be provided in order to allow a user to send and receive audio signals with another compatible device used by another person.

In a typical telephone, a handset is provided which is a shaped form having a microphone and a speaker positioned in a spaced relationship. Typically, both the microphone and the speaker are placed behind a series of ports to allow transmission of sounds to and from them to outside the handset. These ports provide benefits for the acoustic frequency response characteristics of the handset, but can be aesthetically distracting to the appearance of the handset. Further having exposed ports leaves the ports susceptible to blockage from ambient dust or dirt. Liquids spilled around the ports may also enter the port and may damage the devices underneath.

Meanwhile, portable communication devices, such as cellular phones, have smaller and smaller form factors. Positioning transducers for a cellular phone having a small form factor is a difficult task, because there is little area to place a port for a transducer.

EP0871313 discloses a keypad and microphone arrangement for a communication device, said arrangement comprising: a keypad having a key and a base layer supporting said key; a microphone located below said keypad; and an acoustic path connecting said microphone to ambient air above said keypad, wherein said acoustic path extends through an upper surface part of a dialling key of the keypad. In one arrangement, the microphone is located within the key. In another arrangement, the acoustic path extends through the upper part of the key and along and parallel with an underside of the base layer. In each case, the acoustic path has a port in the upper surface of the key that is exposed at the key's surface.

US5265274 discloses a combined speaker and keypad arrangement having a plurality of keys and a plurality of speaker ports interposed between the keys. In this arrangement, all of the ports are exposed at the keypad's surface.

There is a need for an arrangement which addresses deficiencies in the prior art of locating a transducer for a communication device.

### GENERAL

In a first aspect according to the invention, a keypad and microphone arrangement for a communication device may be provided. The arrangement may comprise: a keypad having a key and a base layer supporting said key; a microphone located below said keypad; a port connecting said microphone to ambient air above said base layer, wherein the port comprises a first opening extending from a top side to a bottom side of said base layer and a portion of said key extends fully over said port on said top side.

The key may have a cap portion and a stem portion; said base layer being attached to a bottom part of said stem portion; and said cap portion is said portion of said key which extends fully over said port.

The arrangement may further comprise a key circuit to recognize activation of said key, said key circuit being located beneath said base layer and mounted on a PCB, said PCB may have a second opening from its top surface through its interior to its bottom surface; a second PCB for mounting said microphone thereon; and a support for said key circuit mounted to said second PCB and located below said key circuit, said support having a third opening from its top surface, through its interior to its bottom surface; wherein an air channel is defined from said microphone to said port on said top side of said base layer, said air channel comprising said first opening, said second opening and said third opening.

The air channel may extend vertically upwardly from said microphone in a column.

The port in said top surface of said base layer may be located adjacent a corner of said stem portion of said key.

The stem portion may have an inward notch in a body of said portion at said corner of said portion.

The microphone may be enclosed in a Faraday shield about said second PCB.

The communication device may be a wireless, portable device.

The keys on said keypad may provide an interface for entering text messages for transmission by said communication device.

In a second aspect according to the invention, a wireless communication device having a keypad and microphone arrangement according to the first aspect of the invention may be provided.

In a third aspect, a keypad and microphone arrangement for a communication device may be provided. The arrangement may comprise: a microphone; a printed circuit board (PCB) for mounting the microphone thereon; a keypad having a key and a base layer supporting the key; a key circuit to recognize activation of the key; a support mounted to the PCB around the microphone to support the key circuit and to at least partially cover the microphone; and a port in the base layer connecting the microphone to ambient air above the base layer. In the arrangement, the key circuit may be located beneath the base layer and mounted on a second PCB, which has a first opening from its top surface through its interior to its bottom surface. Also, the support may have a second opening from its top surface, through its interior to its bottom surface. Further, an air channel may be defined from the microphone to the port on the top side of the base layer, such that the air channel includes the first and second openings.

In the arrangement, the air channel may extend vertically upwardly from the microphone in a column.

The arrangement may further comprise a layer of tape located between the support and the second PCB.

The arrangement may further comprise a dome sheet for the keypad located above the second PCB.

In the arrangement, the microphone may be enclosed in a Faraday shield located on the PCB and under the support. Further the shield may have a third opening about the microphone.

The arrangement may further comprise a gasket located about the third opening of the Faraday shield.

In the arrangement, the port may comprise a fourth opening extending from a top side to a bottom side of the base layer and connecting to the air channel. Further, the key may comprise a cap portion and a stem portion; the base layer may be attached to a bottom part of the stem portion; and the cap portion may extend fully over the port.

In the arrangement, the port may be located adjacent a corner of the stem portion of the key.

In the arrangement, the stem portion may have an inward notch located in a region around the fourth opening.

There is also disclosed in the following a keypad and microphone arrangement for a communication device, said arrangement may comprise a key having a cap portion and a stem portion; a base layer attached to said stem portion; a support member to support said key and base layer, said support member having an opening extending from its top surface, through its interior, to its bottom surface; a key circuit to recognize activation of said key; a microphone located beneath said support member; a port in said base layer extending from an upper surface of said base, through an interior of said base layer, to a lower surface of said base layer; and an air channel connecting said microphone to ambient air above said cap portion, said air channel comprising said port and said opening, wherein said stem portion and said cap portion are located about said port such that said cap portion extends fully over said port. The key circuit to recognize activation of said key may be located beneath said base layer and said key circuit is mounted on a PCB, said PCB having a second opening from its top surface through its interior to its bottom surface; the keypad and microphone arrangement may further comprise: a second PCB for mounting said microphone thereon; and a support for said key circuit mounted to said second PCB and being located below said key circuit, said support having a third opening from its top surface, through its interior to its bottom surface; and said air channel may further comprise said second opening and said third opening. The air channel may extend vertically from said microphone to said port in a column. An opening of said port in said top surface of said base layer may be located about a corner of said stem. The stem may have an inward notch in its body in said corner of said stem portion. The microphone may be enclosed in a Faraday shield about said PCB.

There is also described in the following a wireless communication device comprising: an exterior frame; an antenna for transmitting wireless signals; a key having a cap and a stem; a base layer attached to said stem; a support member to support said keypad and said base layer, said support member having an opening extending from its top surface, through its interior, to its bottom surface; a key circuit to recognize activation of said key; a microphone located beneath said support member; a port in said base layer extending from an upper surface of said base, through an interior of said base layer, to a lower surface of said base layer; and an air channel connecting said microphone to ambient air above said cap, said air channel comprising said port and said opening, wherein the stem and said cap are located about said port such that said cap extends fully over said port. The key circuit to recognize activation of said key may be located beneath said base and said key circuit is mounted on a PCB, said PCB having a second opening from its top surface through its interior to its bottom surface; the device may further comprise: a second PCB for mounting said microphone thereon; and a support for said key circuit mounted to said second PCB and being located below said key circuit, said support having a third opening from its top surface, through its interior to its bottom surface; and said air channel further comprises said second opening and said third opening. The air channel may extend vertically from said microphone to said port in a column. An opening of said port in said top surface of said base layer may be located about a corner of said stem. The microphone may be enclosed in a Faraday shield on said second PCB.

There is also disclosed in the following a wireless handheld communication device, comprising: a housing having a front face; a display located proximately to a first end of the front face; a keypad located proximately to a second end of the front face, the second end being substantially opposite to the first end, the keypad having a plurality of keys allowing the entry of alphanumeric text to create textual messages to be wirelessly transmitted from the wireless handheld communications device; a microphone for receiving voice, the microphone being located under the keypad with respect to a user's face, wherein the keypad has at least one audio input port that is located underneath a key of the keypad. The key of the keypad under which is the at least one audio input port may redirect air flow to the at least one audio input port. The air flow may be redirected in a substantially perpendicular manner.

There is also disclosed in the following a wireless handheld communications device, comprising: a housing having a front face; a display located proximately to a first end of the front face; a keypad located proximately to a second end of the front face, the second end being substantially opposite to the first end, the keypad having a plurality of keys allowing the entry of characters, the entry of characters being used in wireless communications from the wireless handheld communications device; and a microphone for receiving voice, the microphone being located under the keypad with respect to a user's face, wherein the keypad has at least one audio input port that is located underneath a key of the keypad.

There is also disclosed in the following a wireless handheld communications device, comprising: a housing having a front face; a display located near a first end of the front face; a keypad located proximately to a second end of the front face, the second end opposing the first end along a length of the front face, the keypad allowing an entry of characters; and a microphone located underneath the keypad, wherein a user may select a text message mode of the wireless handheld communications device.

Generally speaking, in the device, a key circuit may be located beneath the base and the key circuit may be mounted on a PCB. The PCB may have a second opening from its top surface through its interior to its bottom surface. Also, the device may further comprise: a second PCB for mounting the microphone thereon; and a support for the key circuit mounted to the second PCB. The support may be located below the key circuit and may have a third opening from its top surface, through its interior to its bottom surface. Further, the air channel may comprise the second and third openings.

Generally speaking, in the device, the air channel may extend vertically from the microphone to the port in a column, an opening of the port in the top surface of the base layer may be located about a corner of the stem and the microphone may be enclosed in a Faraday shield on the second PCB.

Generally speaking, a wireless handheld communication device may comprise: a housing having a front face; a display located proximately to a first end of the front face; a keypad located proximately to a second end of the front face, the second end being substantially opposite to the first end, the keypad having a plurality of keys allowing the entry of alphanumeric text to create textual messages to be wirelessly transmitted from the wireless handheld communications device; and a microphone for receiving voice, the microphone being located under the keypad with respect to a user's face. In the device the keypad has at least one audio input port that is located underneath a key of the keypad.

Generally speaking, in the device, the key of the keypad under which is the at least one audio input port may redirect air flow to the at least one audio input port.

Generally speaking, in the device, air flow may be redirected in a substantially perpendicular manner.

Generally speaking, a wireless handheld communications device may comprise: a housing having a front face; a display located proximately to a first end of the front face; a keypad located proximately to a second end of the front face, the second end being substantially opposite to the first end, the keypad having a plurality of keys allowing the entry of characters, the entry of characters being used in wireless communications from the wireless handheld communications device; and a microphone for receiving voice, the microphone being located under the keypad with respect to a user's face. In the device, the keypad has at least one audio input port that is located underneath a key of the keypad.

Generally speaking, a wireless handheld communications device may comprise: a housing having a front face; a display located near a first end of the front face; a keypad located proximately to a second end of the front face, the second end opposing the first end along a length of the front face, the keypad allowing an entry of characters; and a microphone located underneath the keypad. With the device, a user may select a text message mode of the wireless handheld communications device.

### BRIEF DESCRIPTION OF DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):

Figure 1 is a diagram of a communication device having a keypad and a microphone according to an embodiment of the invention;

Figure 2 is an exploded perspective view of aspects of the keypad and the microphone of the device of Fig. 1;

Figure 3 is an exploded perspective view of components of the communication device, the keypad and the microphone of Fig. 1;

Figure 4 is a cross-sectional view of selected components of the communication device, the keypad and the microphone of Fig. 3; and

Figure 5 is a top view of a section of the keypad of Fig. 1.

### DESCRIPTION OF PREFERRED EMBODIMENTS

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

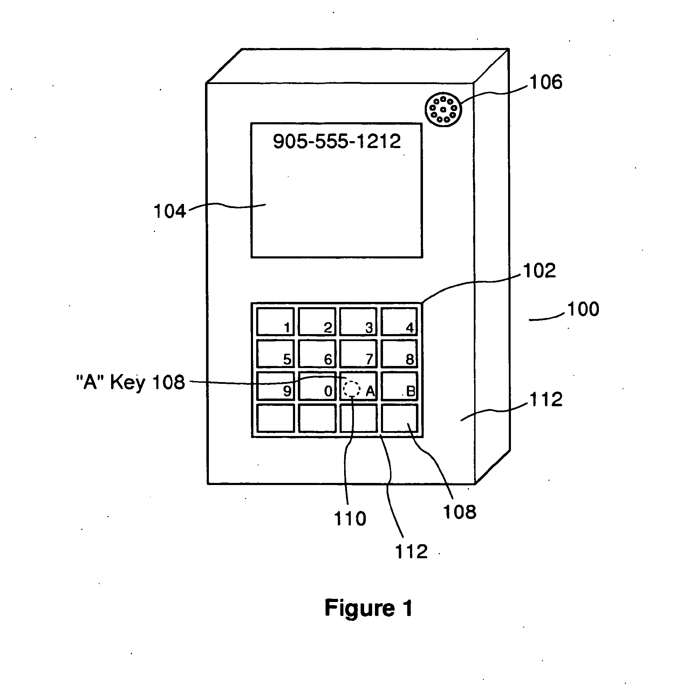

Referring to Figure 1, communication device 100 is shown. Communication device 100 is preferably a wireless communication device such as a cellular phone, a personal digital assistant (PDA) or a wireless device providing voice and data transmission capabilities (such as text messaging or email capabilities). Communication device 100 has wireless transmission of voice capabilities, as provided by cellular communication devices known in the art. However, device 100 may also be a telephone, a cordless telephone, a handset for a telephone or any device providing voice communications. The main user interface elements of communication device 100 for its user are keypad 102, display 104 and speaker 106, all housed within casing 114.

It will be appreciated that the layout of keys 108 within keypad 102 may be numeric, alphabetic, symbolic, alphanumeric or a combination of any of the above. It will also be appreciated that alphabetic keys may be arranged in the standard typist "QWERTY"-layout keyboard, a sequential layout or any other layout.

When a user activates communication device 100 to initiate a call, he enters a called telephone number via pressing appropriate keys 108 on keypad 102. As each key 108 is pressed, display 104 presents the called telephone number as it is built. Upon connection of the call to the called telephone number, the user typically orients it such that speaker 106 is located near his ear and keypad 102 is located near his mouth. Behind the "A" key 108A is port 110. Port 110 forms part of an air channel to the interior of communication device 100. At the end of the air channel, a microphone is located (not shown) which is a transducer to convert the audible energy in the user's spoken words to an electrical signal. Keys 108 are arranged in a spaced relationship such that there is an air gap 112 between sides of adjacent keys 108 to facilitate individual activation of keys 108.

Port 110 is located underneath "A" key 108A. As such, port 110 is hidden from sight from the user. "A" key 108 and its immediately adjacent keys 108 provide a physical barrier to impede foreign elements, such as dust and dirt from covering port 110, which would attenuate the audio signals actually received by the microphone. As such, communication device 100 has a clean aesthetic appearance as port 110 is hidden when viewed from above. It will be appreciated in another embodiment, a corresponding port to port 110 may be located underneath a different key 108.

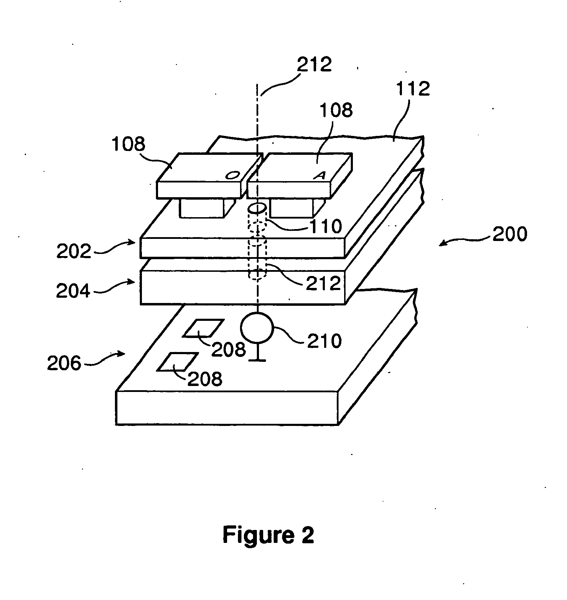

Referring to Fig. 2, further detail on aspects of keypad 102 *vis-a-vis* the microphone are provided. Therein, exploded view 200 provides an exploded view of internal elements of communication device 100. There are three main layers of internal elements: external layer 202; keypad layer 204; and PCB 206. External layer 202 comprises external components exposed to the ambient environment about casing 114. Keypad layer 204 is aligned to be located underneath external layer 202 and provides an electro-mechanical circuit to generate an electrical signal from activation of any key 108 for use by internal circuitry of device 100. PCB 206 is located underneath keypad layer 204 and provides a substrate for supporting internal circuitry for device 100. The internal circuits includes electronic components 208, such as central processing units, radio frequency components, memory units, battery supplies, and microphone 210. Embedded on PCB 206 are electrically-conductive tracks to make circuits for components 208.

Microphone 210 preferably has a channel providing air access to the exterior of device 100 to function effectively. In the embodiment, a space-efficient channel is provided, wherein microphone is vertically aligned with port 110. The channel is defined by a series of openings in each of the three layers. In external layer 202, port 110 extends from its upper surface through its interior to its bottom surface in a preferably cylindrical channel. Keypad layer 204 has port 212 which extends from its top through its interior to its bottom. The upper opening of port 212 is aligned with the bottom opening of port 110. Microphone 210 is preferably located to be directly underneath port 212. As such, the air channel is defined by port 110 and port 212. In other embodiments, a different number of internal ports may be present, placing their microphone either closer to, or further away from, port 110. Additional acoustic insulators may also be provided between interface areas between ports and between a port and microphone 210.

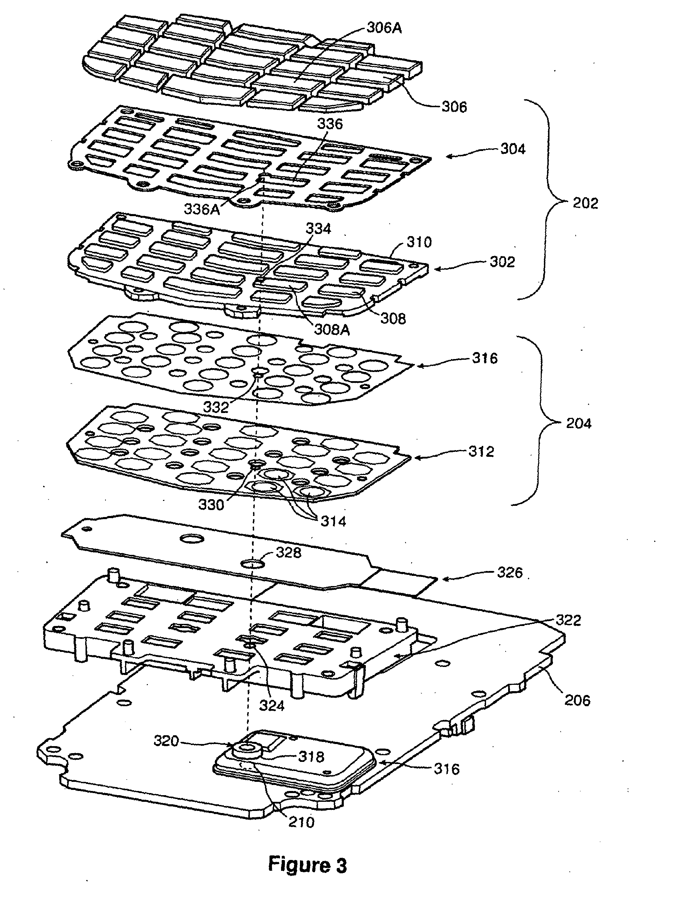

Referring to Fig. 3, further detail is provided on internal elements of device 100 in view 300. External layer 202 comprises base section 302, frame 304 and caps 306. Base section 302 is a silicon-based elastomer formed as a plurality of stems 308 having webbing 310 therebetween to connect bases of stems 308 together. In other embodiments, some or every stem 308 may not be connected together by webbing 310. Each key 108 is comprised of two portions: a cap 306 and a stem 308. Cap 306 is fused to its associated stem 308 by an adhesive. Other bonding techniques, such as sonic welding, may also be used. Stem 308 is a support for cap 306. Pressing on cap 306 causes its stem 308 to be pushed downward to engage an electrical contact for a circuit in keypad layer 204. Further detail on this engagement is provided below. In the embodiment, stem 308 is a solid rectangular shape. However, any volume shape which will support cap 306 and engage the electrical contact will also be suitable. Frame 304 provides a top cover for base section 302 and also provides structural rigidity to keypad 102. As such, frame 304 is preferably made from a sufficiently stiff material, such as a stamped piece of metal or a moulded piece of hard plastic.

Keypad layer 204 comprises keypad PCB 312, a plurality of domes 314 and keypad dome sheet 316. For each key 108, keypad PCB 312 has an electrical circuit located immediately underneath it. The electrical circuit has a first section and a second section in a spaced relationship. Dome 314 sits above the first and second sections for each key 108. Dome 314 is generally a thin, convex, compressible, electrically conductive element. All of domes 314 are held in place by dome sheet 316, which has an adhesive side on it lower surface and a non-adhesive polished side on its upper surface. When key 108 is depressed, stem 308 is moved downward and a bottom portion of stem 308 contacts dome 314 to force it downward. Compression of dome 314 causes it to make contact with the first and second sections of keypad PCB 312 simultaneously, thereby completing an electrical contact between the sections. Circuitry of keypad PCB 312 then recognizes the completion of the contact and appropriate signals are provided to other circuits therein. Upon release of key 108, dome 314 flexes upward, returns to its uncompressed shape and causes key 108 to move upward to its original, unpressed position. Such circuits and elements for making an electrical connection for a key in a keypad, such as key 108, are known in the art.

PCB 206 has microphone 210 mounted onto it within shield can 316. Shield can 316 provides a Faraday shield to isolate microphone 210 from electromagnetic interference. Such interference may originate from signals received and generated by an antenna (not shown) provided for device 100. Shield can 316 has aperture 318 therein to allow sounds entering port 110 to ultimately enter shield can 316 and be exposed to microphone 210. Shield can 316 is preferably made of metal and is shaped to completely enclose microphone 210, but for aperture 318, when microphone 210 is mounted onto PCB 206. Shield can 316 is oblong in shape, but any suitable shape may be used. Alternate embodiments may dispense with having a shield can.

Gasket 320 is an annular ring and is dimensioned to fit within aperture 318 and is comprised of a compressible material. In the embodiment, it is compressible by approximately 40%. Gasket 320 is positioned such that its lower end rests against microphone 210 and its upper end extends towards the bottom surface of keypad support 332. Other materials may be used if other compression characteristics are required. Alternate embodiments may dispense with having a gasket.

Keypad support 322 provides a raised bracket for PCB 206 to locate keypad layer 202 at an appropriate height in casing 114, while allowing components 208 to be located on PCB 206 underneath it. In situ, sides of keypad support rest on the surface of PCB 206 and snap tabs in the sides engage with the bottom of PCB 206 to snugly secure keypad support 322 to PCB 206. As such, keypad support 322 also provides a brace for keypad 108 as keys 108 are pressed. Aperture 324 in keypad support 322 provides an opening to continue the air channel from port 110 to microphone 210 and is vertically aligned with aperture 318 and the interior of gasket 320. When keypad support 322 is secured to PCB 206, gasket 320 is compressed, but it still maintains an internal cavity, thereby defining an acoustic channel for sound to travel through opening 324 in keypad support 322 directly to microphone 210.

To adhere keypad layer 204 to elements associated with PCB 206, double-sided adhesive tape 326 is provided. The bottom of keypad PCB 312 is affixed to the top of keypad support 322 by adhesive tape 326. Opening 328 in adhesive tape 326 allows the air channel to be maintained from microphone 210 through keypad support 322 through adhesive tape 326 to keypad layer 204.

Continuing with the air channel, in keypad layer 204, port 212 is defined by opening 330 in keypad PCB 312 and opening 332 in dome sheet 316. In base section 302, opening 334 is provided for the air channel and aligns with opening 332. In frame 304, opening 336 has section 336A which aligns with opening 334.

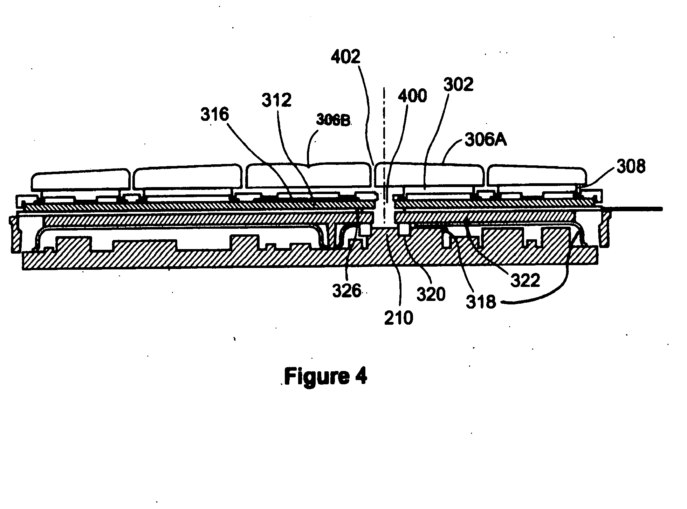

Referring to Fig. 4, elements of Fig. 3 are shown in cross section providing a different view of the air channel. Therein, air channel 400 is comprised of a channel formed by ports 110 and 212, openings 336A, 334, 332, 330, 328 and 324 and gasket to provide access to microphone 210. It will be appreciated that in other embodiments, the air channel may have a different volume, a different cross section and a different location relative to the location of microphone 210. In other embodiments, there may be multiple air channels and a series of air channels may be provided to connect a series of ports to the microphone. Therein, some of the ports, if not all of the ports, may be hidden by one or more keys and their covers. As seen, when key 108 is fully engaged, preferably there is still a gap between the bottom of cap 306A and frame 304, such that port 110 is not physically sealed by the bottom of cap 306A. However, in other embodiments, cap 306A may temporarily seal port 110 when key 108 is fully engaged, as long as the seal is broken upon release of key 108.

Air channel 400 is completed by space 402, located between caps 306A and 306B, to ambient air. While air channel 400 is complete, port 110 is obscured from view by cap 306A and its adjacent cap 306 located to the left of cap 306A. It will be appreciated that in other embodiments, cap 306A may in further laterally extend across port 110 to provide a different degree of obscuring when viewed from above.

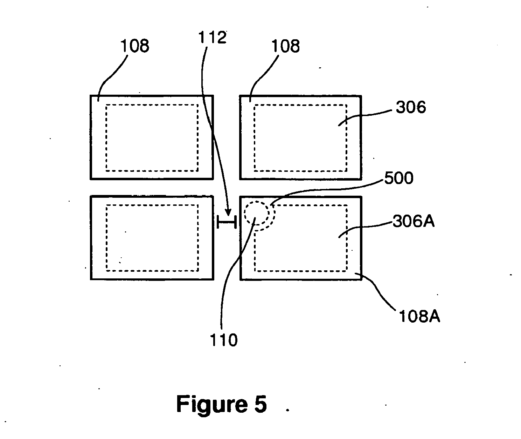

Referring to Fig. 5, a selection of keys 108 in keypad 102 are shown. "A" key 108A is located amongst neighbouring keys 108. Caps 306 of keys 108 are made of a polycarbonate material, although other materials known in the art of keypads may be used. Each of caps 306 is shown as a having a quadrilateral cross-section, however, any shape of cap 306 would also work in other embodiments. Such shapes include ovoid, rectangular and a general polygon. Port 110 is mostly, if not fully, obscured from view from above by cap 306A. Caps immediately to the left, above and diagonally to the left and above cap 306A assist in obscuring port 110, when viewed from different angles from above. Gaps 112 provide spacing between keys 108. In other embodiments, no gap 112 is provided. Therein, acoustic energy must reach port 110 by entering from the ambient environment to an exterior edge of keypad 102 then travelling through a gap defined by the bottom surface of caps 306, the top of frame 204 and the sides of stems 308 to reach port 110.

Each key is preferably painted with its associated symbol. Accordingly, "A" key 108 is painted with an "A" symbol on it. However, keys may also be silk screened, impressed with, embossed upon, its associated symbol(s). Painting or silk screening key 108 also obscures port 110 from sight when keypad 102 is viewed from above. In other embodiments, keys 108 may be covered with a semi-opaque paint. Alternatively, a substrate used to manufacture cap 306 may be sufficiently opaque to obscure port 110.

Underneath each key 108 the outline of its associated stem 308 is shown. Keys 108 which are not associated with port 110 generally have rectangular-shaped footprints for their respective stems 308. However, "A" key 108 is used to obscure port 110. As such, the shape of stem 308A is adjusted to allow placement of port 110 underneath cap 306A. In particular, in the upper left corner of the footprint of stem 308A, internal notch 500 is provided, which is excised from stem 308A. Notch 500 provides more room around port 110. Opening 336 in frame 304 is made to be slightly larger than the exterior dimension of port 110. Alternative embodiments may have port 110 more fully, if not completely, enclosed within the footprint of stem 308A. Alternative embodiments do not use a notch, when the dimensions of its cap 306, stem 208, port 110 and location of port 110 are arranged to sufficiently obscure sight of its port 110 from above.

In other embodiments, the external port for the enclosed transducer may be obscured from sight by a non-functional key or a decorative cover providing a raised cover to the external port.

In still other embodiments, the air channel and port may be integrated into at least a part of the key obscuring the port. For example, the air channel may be integrated into the stem of a key and the port may be on a side of the stem. Alternatively, the air channel may pass entirely through the stem and the cap, with the port being an opening on a surface of the cap, such as its top, side or exposed underside. In other embodiments, one or more caps or stems near the port may have cut-in channels therein, to provide additional alternative path(s) for sound energy to access the port.

It will be appreciated that the embodiment permits arrangement of an antenna, microphone 210 and keypad 102 in device 100 to be in close proximity to each other.

While aspects of the embodiment have been associated with a communication device, it will be appreciated that in other further embodiments, the keypad and microphone arrangement described herein may be applied to any device having a microphone and a keypad. For example, one such device is a device having a media play back component (such as a CD player) with (audio) recording capabilities.

Although the invention has been described with reference to certain specific embodiments, various modifications thereof will be apparent to those skilled in the art without departing from the scope of the invention as outlined in the claims appended hereto.

## Claims

1. A keypad and microphone arrangement (200) for a communication device (100), said arrangement comprising:
a microphone (210);
a printed circuit board 'PCB' (206) for mounting said microphone (210) thereon;
a keypad (102) having a key (108A) and a base layer (302) supporting said key;
a key circuit to recognize activation of said key, said key circuit located beneath
said base layer (302) and mounted on a second PCB'(312), said second PCB (312) having a first opening (330) from its top surface through its interior to its bottom surface;
a support (322) mounted to said PCB (206) around said microphone to support said key circuit and to at least partially cover said microphone, said support having a second opening (324) from its top surface, through its interior to its bottom surface; and
a port (110) in said base layer connecting said microphone to ambient air above said base layer,
wherein an air channel is defined from said microphone (210) to said port (110) on said top side of said base layer (302), said air channel comprising said first opening (330) and said second opening (324).

2. The keypad and microphone arrangement as claimed in claim 1, wherein said air channel extends vertically upwardly from said microphone (210) in a column.

3. The keypad and microphone arrangement as claimed in claim 1 or claim 2, further comprising a layer of tape (326) located between said support (322) and said second PCB (312).

4. The keypad and microphone arrangement as claimed in any one of claims 1 to 3, further comprising a dome sheet (316) for said keypad (102) located above said second PCB (312).

5. The keypad and microphone arrangement as claimed in any one of claims 1 to 4, wherein said microphone (210) is enclosed in a Faraday shield (316) located on said PCB (206) and under said support (322), said Faraday shield (316) having a third opening (332) about said microphone (210).

6. The keypad and microphone arrangement as claimed in claim 5, further comprising a gasket (320) located about said third opening (332) of said Faraday shield (316).

7. The keypad and microphone arrangement as claimed in any one of claims 1 to 6, wherein:
said port (110) comprises a fourth opening (334) extending from a top side to a bottom side of said base layer (302) and connecting to said air channel;
said key (108A) comprises a cap portion (306A) and a stem portion (308A);
said base layer (302) is attached to a bottom part of said stem portion (308); and
said cap portion (306) extends fully over said port (110) on said top side.

8. The keypad and microphone arrangement as claimed in claim 7, wherein said port (110) is located adjacent a corner of said stem portion (308A) of said key (108A).

9. The keypad and microphone arrangement as claimed in claim 7 or claim 8,
wherein said stem portion (308A) has an inward notch (500) at located in a region around fourth opening.

10. The keypad and microphone arrangement as claimed in any one of claims 1 to 9, wherein said key (108A) comprises a cap portion (306A) which extends fully over said port (110).

11. The keypad and microphone arrangement as claimed in any one of claims 1 to 9, wherein said key (108A) comprises a stem portion (308A) and said port (110) is located adjacent a corner of said stem portion (308A).

12. The keypad and microphone arrangement as claimed in claim 11, wherein said stem portion (308A) has an inward notch (500) in a body of said portion at said corner of said portion.

13. The keypad and microphone arrangement as claimed in any one of claims 1 to 12, wherein said communication device is a wireless, portable device (100).

14. The keypad and microphone arrangement as claimed in any one of claims 1 to 13, wherein keys (108) on said keypad provide an interface for entering text messages for transmission by said communication device (100).

15. A communications device (100) having a keypad and microphone arrangement (200) as claimed in any one of claims 1 to 14.

## Patentansprüche

1. Tastenfeld- und Mikrofonanordnung (200) für eine Kommunikationsvorrichtung (100), wobei die Anordnung Folgendes umfasst:
ein Mikrofon (210);
eine Leiterplatte 'PCB' (206), um das Mikrofon (210) darauf zu befestigen;
ein Tastenfeld (102), das eine Taste (108A) und eine Basisschicht (302), die die Taste stützt, aufweist;
einen Tastenschaltkreis, um eine Betätigung der Taste zu erkennen, wobei sich der Tastenschaltkreis unterhalb der Basisschicht (302) befindet und auf einer zweiten PCB (312) befestigt ist, wobei die zweite PCB (312) eine erste Öffnung (330) von ihrer Oberseite durch ihr Inneres hindurch zu ihrer Unterseite aufweist;
eine Stütze (322), die um das Mikrofon herum an der PCB (206) befestigt ist, um den Tastenschaltkreis zu stützen und das Mikrofon mindestens teilweise zu bedecken, wobei die Stütze eine zweite Öffnung (324) von ihrer Oberseite durch ihr Inneres hindurch zu ihrer Unterseite aufweist; und
eine Öffnung (110) in der Basisschicht, die das Mikrofon mit der Umgebungsluft über der Basisschicht verbindet,
wobei ein Luftkanal von dem Mikrofon (210) zu der Öffnung (110) auf der Oberseite der Basisschicht (302) abgegrenzt ist und der Luftkanal die erste Öffnung (330) und die zweite Öffnung (324) umfasst.

2. Tastenfeld- und Mikrofonanordnung nach Anspruch 1, wobei sich der Luftkanal in einer Säule von dem Mikrofon (210) vertikal aufwärts erstreckt.

3. Tastenfeld- und Mikrofonanordnung nach Anspruch 1 oder Anspruch 2, die des Weiteren eine Schicht Band (326) umfasst, die zwischen der Stütze (322) und der zweiten PCB (312) angeordnet ist.

4. Tastenfeld- und Mikrofonanordnung nach einem der Ansprüche 1 bis 3, die des Weiteren eine Kuppelfolie (316) für das Tastenfeld (102) umfasst, die über der zweiten PCB (312) angeordnet ist.

5. Tastenfeld- und Mikrofonanordnung nach einem der Ansprüche 1 bis 4, wobei das Mikrofon (210) in einem Faradayschen Käfig (316) enthalten ist, der auf der PCB (206) und unter der Stütze (322) angeordnet ist, wobei der Faradaysche Käfig (316) eine dritte Öffnung (332) um das Mikrofon (210) herum aufweist.

6. Tastenfeld- und Mikrofonanordnung nach Anspruch 5, die des Weiteren eine Dichtung (320) umfasst, die um die dritte Öffnung (332) des Faradayschen Käfigs (316) herum angeordnet ist.

7. Tastenfeld- und Mikrofonanordnung nach einem der Ansprüche 1 bis 6, wobei:
die Öffnung (110) ein viertes Loch (334) umfasst, das sich von einer Oberseite zu einer Unterseite der Basisschicht (302) erstreckt und mit dem Luftkanal verbunden ist;
die Taste (108A) einen Kappenabschnitt (306A) und einen Stammabschnitt (308A) umfasst;
die Basisschicht (302) an einem unteren Teil des Stammabschnitts (308) befestigt ist; und
sich der Kappenabschnitt (306) vollständig über die Öffnung (110) in der Oberseite erstreckt.

8. Tastenfeld- und Mikrofonanordnung nach Anspruch 7, wobei die Öffnung (110) benachbart zu einer Ecke des Stammabschnitts (308A) der Taste (108A) angeordnet ist.

9. Tastenfeld- und Mikrofonanordnung nach Anspruch 7 oder Anspruch 8, wobei der Stammabschnitt (308A) eine Einwärtskerbe (500) aufweist, die sich in einem Bereich um das vierte Loch herum befindet.

10. Tastenfeld- und Mikrofonanordnung nach einem der Ansprüche 1 bis 9, wobei die Taste (108A) einen Kappenabschnitt (306A) umfasst, der sich vollständig über die Öffnung (110) erstreckt.

11. Tastenfeld- und Mikrofonanordnung nach einem der Ansprüche 1 bis 9, wobei die Taste (108A) einen Stammabschnitt (308A) umfasst und die Öffnung (110) benachbart zu einer Ecke des Stammabschnitts (308A) angeordnet ist.

12. Tastenfeld- und Mikrofonanordnung nach Anspruch 11, wobei der Stammabschnitt (308A) eine Einwärtskerbe (500) in einem Körper des Abschnitts an der Ecke des Abschnitts aufweist.

13. Tastenfeld- und Mikrofonanordnung nach einem der Ansprüche 1 bis 12, wobei die Kommunikationsvorrichtung eine drahtlose, tragbare Vorrichtung (100) ist.

14. Tastenfeld- und Mikrofonanordnung nach einem der Ansprüche 1 bis 13, wobei die Tasten (108) auf dem Tastenfeld eine Schnittstelle zur Eingabe von Textmitteilungen zur Übertragung durch die Kommunikationsvorrichtung (100) bereitstellen.

15. Kommunikationsvorrichtung (100) mit einer Tastenfeld- und Mikrofonanordnung (200) nach einem der Ansprüche 1 bis 14.

## Revendications

1. Un agencement de mini-clavier et de microphone (200) pour un dispositif de communication (100), ledit agencement comportant :
un microphone (210) ;
une carte de circuit imprimé (206) sur laquelle monter ledit microphone (210) ;
un mini-clavier (102) ayant une touche (108A) et une couche de base (302) supportant ladite touche ;
un circuit de touche pour reconnaître un actionnement de ladite touche, ledit circuit de touche étant situé sous ladite couche de base (302) et monté sur une deuxième carte de circuit imprimé (312), ladite deuxième carte de circuit imprimé (312) ayant une première ouverture (330) à partir de sa surface de dessus à travers son intérieur jusqu'à sa surface de dessous ;
un support (322) monté sur ladite carte de circuit imprimé (206) autour dudit microphone pour supporter ledit circuit de touche et pour couvrir au moins partiellement ledit microphone, ledit support ayant une deuxième ouverture (324) à partir de sa surface de dessus, à travers son intérieur jusqu'à sa surface de dessous ; et
un port (110) dans ladite couche de base connectant ledit microphone à l'air ambiant au-dessus de ladite couche de base,
dans lequel un canal d'air est défini dudit microphone (210) audit port (110) sur ladite face de dessus de ladite couche de base (302), ledit canal d'air comportant ladite première ouverture (330) et ladite deuxième ouverture (324).

2. L'agencement de mini-clavier et de microphone tel que revendiqué dans la revendication 1, dans lequel ledit canal d'air s'étend verticalement vers le haut à partir dudit microphone (210) dans une colonne.

3. L'agencement de mini-clavier et de microphone tel que revendiqué dans la revendication 1 ou la revendication 2, comportant de plus une couche de ruban adhésif (326) située entre ledit support (322) et ladite deuxième carte de circuit imprimé (312).

4. L'agencement de mini-clavier et de microphone tel que revendiqué dans n'importe laquelle des revendications 1 à 3, comportant de plus une feuille de dômes (316) pour ledit mini-clavier (102) située au-dessus de ladite deuxième carte de circuit imprimé (312).

5. L'agencement de mini-clavier et de microphone tel que revendiqué dans n'importe laquelle des revendications 1 à 4, dans lequel ledit microphone (210) est enfermé dans une cage de Faraday (316) située sur ladite carte de circuit imprimé (206) et sous ledit support (322), ladite cage de Faraday (316) ayant une troisième ouverture (332) située près dudit microphone (210).

6. L'agencement de mini-clavier et de microphone tel que revendiqué dans la revendication 5, comportant de plus une garniture (320) située près de ladite troisième ouverture (332) de ladite cage de Faraday (316).

7. L'agencement de mini-clavier et de microphone tel que revendiqué dans n'importe laquelle des revendications 1 à 6, dans lequel :
ledit port (110) comporte une quatrième ouverture (334) s'étendant d'une face de dessus à une face de dessous de ladite couche de base (302) et se connectant audit canal d'air ;
ladite touche (108A) comporte une portion capuchon (306A) et une portion pied (308A) ;
ladite couche de base (302) est attachée à une partie du bas de ladite portion pied (308) ; et
ladite portion capuchon (306) s'étend complètement par-dessus ledit port (110) sur ladite face de dessus.

8. L'agencement de mini-clavier et de microphone tel que revendiqué dans la revendication 7, dans lequel ledit port (110) est situé de façon adjacente à un coin de ladite portion pied (308A) de ladite touche (108A).

9. L'agencement de mini-clavier et de microphone tel que revendiqué dans la revendication 7 ou la revendication 8, dans lequel ladite portion pied (308A) a une encoche vers l'intérieur (500) située dans une région autour de la quatrième ouverture.

10. L'agencement de mini-clavier et de microphone tel que revendiqué dans n'importe laquelle des revendications 1 à 9, dans lequel ladite touche (108A) comporte une portion capuchon (306A) qui s'étend complètement par-dessus ledit port (110).

11. L'agencement de mini-clavier et de microphone tel que revendiqué dans n'importe laquelle des revendications 1 à 9, dans lequel ladite touche (108A) comporte une portion pied (308A) et ledit port (110) est situé de façon adjacente à un coin de ladite portion pied (308A).

12. L'agencement de mini-clavier et de microphone tel que revendiqué dans la revendication 11, dans lequel ladite portion pied (308A) a une encoche vers l'intérieur (500) dans un corps de ladite portion au niveau dudit coin de ladite portion.

13. L'agencement de mini-clavier et de microphone tel que revendiqué dans n'importe laquelle des revendications 1 à 12, dans lequel ledit dispositif de communication est un dispositif portatif sans fil (100).

14. L'agencement de mini-clavier et de microphone tel que revendiqué dans n'importe laquelle des revendications 1 à 13, dans lequel des touches (108) sur ledit mini-clavier fournissent une interface pour saisir des messages textuels destinés à être transmis par ledit dispositif de communication (100).

15. Un dispositif de communication (100) ayant un agencement de mini-clavier et de microphone (200) tel que revendiqué dans n'importe laquelle des revendications 1 à 14.
